# EUROPEAN PATENT APPLICATION

(11) **EP 4 694 412 A1**
(43) Date of publication of application: **11.02.2026**
(21) Application number: 23929223.8
(22) Date of filing: 29.03.2023
(51) Int. Cl.: H04W 64/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Taor, Simon Edward William
(86) International application number: PCT/CN2023/084601
(87) International publication number: WO 2024/197624

(57) **Abstract**

Embodiments of the present disclosure provide a method for wireless communication and a device. An ambient power (AMP) device can generate, based on at least one target signal received, a first signal and a second signal that have an association relationship, harvest energy through the first signal, and perform positioning based on the second signal, thereby reducing signaling overhead required for positioning by the AMP device and improving system efficiency. The method for wireless communication includes the following. An AMP device receives at least one target signal transmitted by a first device, where the at least one target signal is used to generate a first signal and a second signal that have an association relationship. The AMP device harvests energy through the first signal, and performs positioning based on the second signal.

## Description

### TECHNICAL FIELD

Embodiments of the present disclosure relate to the field of communication, and in particularly to a method for wireless communication device and a device.

### BACKGROUND

At present, in order to achieve low-power communication, ambient power (AMP) devices have been introduced. The AMP device can harvest energy required for operation from a variety of ambient energies including radio frequency (RF) radio energy, light energy, solar energy, heat energy, mechanical energy, etc. In view of the capability and power consumption limitation of the AMP device, how the AMP device performs positioning is a problem to be addressed.

### SUMMARY

Embodiments of the present disclosure provide a method for wireless communication and a device, where an ambient power (AMP) device can generate a first signal and a second signal that have an association relationship based on at least one target signal received, harvest energy through the first signal, and perform positioning based on the second signal, thereby reducing signaling overhead for positioning by the AMP device and improving system efficiency.

In a first aspect, a method for wireless communication is provided. The method includes the following. An AMP device receives at least one target signal transmitted by a first device, where the at least one target signal is used to generate a first signal and a second signal that have an association relationship. The AMP device harvests energy through the first signal, and performs positioning based on the second signal.

In a second aspect, a method for wireless communication is provided. The method includes the following. A first device transmits at least one target signal to an AMP device, where the at least one target signal is used to generate a first signal and a second signal that have an association relationship, the first signal is used by the AMP device to harvest energy, and the second signal is used by the AMP device to perform positioning.

In a third aspect, an AMP device is provided, where the AMP device is configured to perform the method described in the first aspect above. Specifically, the AMP device includes a functional module(s) configured to perform the method described in the first aspect above.

In a fourth aspect, a first device is provided, where the first device is configured to perform the method described in the second aspect above. Specifically, the first device includes a functional module(s) configured to perform the method described in the second aspect above.

In a fifth aspect, an AMP device is provided, where the AMP includes a processor and a memory. The memory is configured to store a computer program, and the processor is configured to invoke and run the computer program stored in the memory, such that the AMP device performs the method described in the first aspect above.

In a sixth aspect, a first device is provided, where the first device includes a processor and a memory. The memory is configured to store a computer program, and the processor is configured to invoke and run the computer program stored in the memory, such that the first device performs the method described in the second aspect above.

In a seventh aspect, an apparatus is provided, where the apparatus is configured to implement any of the methods described in the first aspect to the second aspect above. Specifically, the apparatus includes a processor configured to invoke and run a computer program from a memory, such that a device equipped with the apparatus performs any of the methods described in the first aspect to the second aspect above.

In an eighth aspect, a computer-readable storage medium is provided, where the computer-readable storage medium is configured to store a computer program, and the computer program is configured to cause a computer to perform any of the methods described in the first aspect to the second aspect above.

In a ninth aspect, a computer program product is provided, including computer program instructions, where the computer program instructions are configured to cause a computer to perform any of the methods described in the first aspect to the second aspect above.

In a tenth aspect, a computer program is provided, which, when executed on a computer, is configured to cause the computer to perform any of the methods described in the first aspect to the second aspect above.

By means of the above technical solutions, the AMP device can generate, based on at least one target signal received, the first signal and the second signal that have an association relationship, harvest energy through the first signal, and perform positioning based on the second signal, thereby reducing signaling overhead required for positioning by the AMP device and improving system efficiency.

### BRIEF DESCRIPTION OF THE DRAWINGS

FIG. 1 is a schematic diagram of a communication system architecture to which embodiments of the present disclosure are applicable.
FIG. 2 is a schematic flow chart of a method for wireless communication according to embodiments of the present disclosure.
FIG. 3 is a schematic diagram illustrating wireless charging coverage of wireless charging nodes (WCNs) according to embodiments of the present disclosure.
FIG. 4 is a schematic diagram illustrating a case in which a first signal and a second signal satisfy a power-division multiplexing (PDM) relationship according to embodiments of the present disclosure.
FIG. 5 is a schematic diagram illustrating a case in which a first signal and a second signal satisfy a time-division multiplexing (TDM) relationship according to embodiments of the present disclosure.
FIG. 6 is a schematic diagram illustrating a case in which a first signal and a second signal satisfy both a PDM relationship and a TDM relationship according to embodiments of the present disclosure.
FIG. 7 is a schematic diagram illustrating a case in which a first signal and a second signal satisfy a frequency-division multiplexing (FDM) relationship according to embodiments of the present disclosure.
FIG. 8 is a schematic block diagram of an ambient power (AMP) device according to embodiments of the present disclosure.
FIG. 9 is a schematic block diagram of a first device according to embodiments of the present disclosure.
FIG. 10 is a schematic block diagram of a communication device according to embodiments of the present disclosure.
FIG. 11 is a schematic block diagram of an apparatus according to embodiments of the present disclosure.
FIG. 12 is a schematic block diagram of a communication system according to embodiments of the present disclosure.

### DETAILED DESCRIPTION

The following will describe technical solutions of embodiments of the present disclosure with reference to the accompanying drawings in embodiments of the present disclosure. Apparently, the embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The technical solutions of embodiments of the present disclosure are applicable to various communication systems, for example, wireless local area networks (WLAN), wireless fidelity (WiFi), or other communication systems. For example, the technical solutions of embodiments of the present disclosure are also applicable to a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), an internet of things (IoT), a 5^{th}-generation (5G) communication system, a 6^{th}-generation (6G) communication system, or other communication systems, etc.

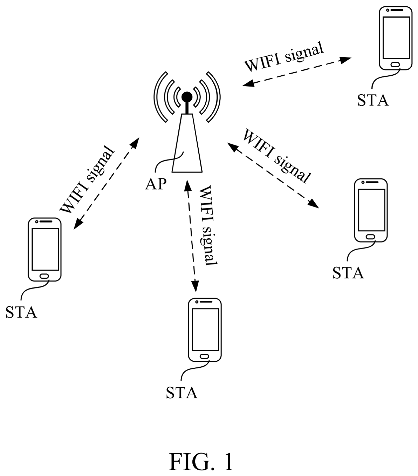

FIG. 1 is a schematic diagram of a wireless communication system provided in an embodiment of the present disclosure. As illustrated in FIG. 1, the wireless communication system may include an access point (AP) and stations (STAs).

In some scenarios, the AP may be referred to as an AP STA, that is, the AP is also a type of STA in some sense. In some scenarios, the STA may be referred to as a non-AP STA.

In some embodiments, the STAs may include an AP STA(s) and a non-AP STA(s). Communication in the communication system may be communication between the AP and the non-AP STA, communication between the non-AP STAs, or communication between the STA and a peer STA. The peer STA may refer to a device for communicating with a peer of the STA. For example, the peer STA may be an AP or a non-AP STA.

The AP may be a bridge for connecting a wired network and a wireless network. The AP is mainly used for connecting various wireless network clients together and then connecting the wireless network to an Ethernet. The AP may be a terminal device (for example, a mobile phone) having a Wi-Fi chip or a network device (for example, a router).

It may be understood that, a role of the STA in the communication system is not absolute. For example, in some scenarios, when a mobile phone is connected to a router, the mobile phone is a non-AP STA. When the mobile phone serves as a hotspot for another mobile phone, the mobile phone serves as an AP.

The AP and the non-AP STA may be devices applied to vehicle to everything (V2X); IoT nodes, sensors, etc. in IoT; smart cameras, smart remote controls, smart water meters and electricity meters, etc. in smart home; sensors in smart city, etc.

In some embodiments, the non-AP STA may support 802.11be standards. The non-AP STA may also support various current and future 802.11 WLAN standards, such as 802.11ax, 802.11ac, 802.11n, 802.11g, 802.11b, 802.11a, etc.

In some embodiments, the AP may be a device that supports 802.11be standards. The AP may also be a device that supports various current and future 802.11 WLAN standards, such as 802.11ax, 802.11ac, 802.11n, 802.11g, 802.11b, 802.11a, etc.

In embodiments of the present disclosure, the STA may be a device supporting WLAN/Wi-Fi technology, such as a mobile phone, a tablet (pad), a computer, a virtual reality (VR) device, an augmented reality (AR) device, a wireless device in industrial control, a set-top box, a wireless device in self-driving, an in-vehicle communication device, a wireless device in remote medicine, a wireless device in smart grid, a wireless device in transportation safety, a wireless device in smart city or a wireless device in smart home, a wireless communication chip, an application specific integrated circuit (ASIC), a system-on-chip (SOC), etc.

A frequency band supported by WLAN technology may include, but is not limited to, a low frequency band (2.4 Giga Hertz (GHz), 5 GHz, and 6 GHz), and a high frequency band (45 GHz, 60 GHz).

One or more links exist between the STA and the AP. In some embodiments, the STA and the AP support multi-band communication, for example, communicate simultaneously on frequency bands of 2.4 GHz, 5 GHz, 6 GHz, 45 GHz, and 60 GHz, or communicate simultaneously on different channels of the same frequency band (or different frequency bands), thereby improving communication throughput and/or reliability between devices. Such a device is generally referred to as a multi-band device, or referred to as a multi-link device (MLD), and is sometimes referred to as a multi-link entity or a multi-band entity. The MLD may be an AP or an STA. When the MLD is an AP, the MLD includes one or more APs. When the MLD is an STA, the MLD includes one or more non-AP STAs.

An MLD including one or more APs may be referred to as an AP MLD, and an MLD including one or more non-AP STAs may be referred to as a non-AP MLD.

In embodiments of the present disclosure, the AP may include multiple APs, and the non-AP includes multiple STAs. Multiple links may be established between an AP(s) in the AP and an STA(s) in the non-AP, and the AP in the AP and the corresponding STA in the non-AP may perform data communication over a corresponding link.

The AP is a device deployed in WLAN to provide wireless communication functions for the STA. The STA may include: a user equipment (UE), an access terminal, a subscriber unit, a subscriber station, a mobile station, a remote station, a remote terminal, a mobile device, a wireless communication device, a user agent, or a user device. Optionally, the STA may also be a cellular phone, a cordless phone, a session initiation protocol (SIP) phone, a wireless local loop (WLL) station, a personal digital assistant (PDA), a handheld device with wireless communication functions, a computing device or other processing device connected to a wireless modem, a vehicle-mounted device, or a wearable device, which is not limited in embodiments of the present disclosure.

Optionally, the STA and the AP both support institute of electrical and electronics engineers (IEEE) 802.11 standards.

In some embodiments, the communication system in embodiments of the present disclosure may be applied to a carrier aggregation (CA) scenario, or may be applied to a dual connectivity (DC) scenario, or may be applied to a standalone (SA) scenario.

In some embodiments, the communication system in embodiments of the present disclosure is applicable to an unlicensed spectrum, and an unlicensed spectrum may be regarded as a shared spectrum. Or the communication system in embodiments of the present disclosure is applicable to a licensed spectrum, and a licensed spectrum may be regarded as a non-shared spectrum.

In some embodiments, the communication system in the present disclosure may be applicable to frequency range 1 (FR1) (corresponding to a frequency range of 410 Megahertz (MHz) to 7.125 Gigahertz (GHz), FR2 (corresponding to a frequency range of 24.25 GHz to 52.6 GHz), as well as new frequency ranges, such as high-frequency bands corresponding to a frequency range of 52.6 GHz to 71 GHz or a frequency range of 71 GHz to 114.25 GHz.

It may be understood that, the terms "system" and "network" herein are usually used interchangeably throughout this disclosure. The term "and/or" herein only describes an association relationship between associated objects, which means that there may be three relationships. For example, *A* and/or *B* may mean *A* alone, both *A* and *B* exist, and *B* alone. In addition, the character "/" herein generally indicates that the associated objects are in an "or" relationship.

Terms used in the embodiments of the present disclosure are merely intended for explaining embodiments of the present disclosure rather than limiting the present disclosure. The terms "first", "second", "third", "fourth", and the like used in the specification, the claims, and the accompany drawings of the present disclosure are used to distinguish different objects rather than describe a particular order. In addition, the terms "include", "comprise", and "have" as well as variations thereof are intended to cover non-exclusive inclusion.

It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C*, and *B* can be obtained according to *C*; or may mean that that there is an association relationship between *A* and*B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the present disclosure, the "pre-defined" or "pre-configured" may be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, a Wi-Fi protocol, or an evolution of a protocol related to other communication systems, and the protocol type is not limited in the present disclosure.

To facilitate a better understanding of the embodiments of the present disclosure, positioning involved in the present disclosure is described below.

Timing, angle, and carrier phase based positioning methods have long been used in Wi-Fi, 4G, 5G, and global navigation satellite system (GNSS) networks. Due to very limited power and processing capability, AMP devices cannot transmit a wideband positioning reference signal (PRS), so that timing-based positioning methods, such as observed time difference of arrival (OTDOA), cannot achieve satisfactory positioning accuracy. For the same reason, angle-based positioning is also not applicable since AMP devices can neither accurately measure the angle of an incoming signal nor transmit/reflect a fairly directional signal.

To facilitate a better understanding of the embodiments of the present disclosure, AMP devices involved in the present disclosure are described below.

AMP devices can harvest energy from a variety of energy sources including radio frequency (RF) radio, solar, heat, etc. Among all energy sources, RF radio is the most controllable resource. For RF radio energy harvesting, the narrowband sub-1 GHz (S1G) signal is more suitable for AMP devices to harvest energy due to its good propagation property.

It may be additionally noted that, AMP devices may also be referred to as ambient power enabled IoT devices, or simply ambient IoT devices. Specifically, ambient IoT devices refer to IoT devices that can use a variety of ambient energies, such as RF radio energy, light energy, solar energy, heat energy, mechanical energy, and other types of ambient energy. Ambient IoT devices may have no energy storage capability, or may have very limited energy storage capability (for example, using a capacitor with a capacity of tens of microfarads (uF)).

In some embodiments, ambient IoT devices may be used in at least the following four types of scenarios:
object identification, such as logistics management, management of products in production lines, and supply chain management;
environmental monitoring, such as monitoring of temperature, humidity, and harmful gas in operating or natural environments;
positioning, such as indoor positioning, smart item locating, and production line item positioning;
intelligent control, such as intelligent control of various appliances in smart homes (turning on/off air conditioners, adjusting temperature), and intelligent control of various facilities in agricultural greenhouses (automatic irrigation, fertilization).

To facilitate a better understanding of the embodiments of the present disclosure, the problem to be solved by the present disclosure is described below.

In view of the capability and power consumption limitations of AMP devices, how AMP devices perform positioning is a problem that needs to be addressed.

Based on the foregoing problem, the present disclosure proposes a solution for positioning by an AMP device, providing a joint signal design for wireless charging and positioning. An AMP device may generate a first signal and a second signal that have an association relationship based on at least one target signal received, may harvest energy through the first signal, and may perform positioning based on the second signal. Therefore, signaling overhead required for positioning by an AMP device may be reduced and system efficiency may be improved.

Specifically, a narrowband S1G signal is more suitable for an AMP device to harvest energy due to its good propagation property. In addition, the narrowband S1G signal can also be used for phase-based positioning. That is, in order to achieve reasonable wireless charging distance, the low frequency signal, e.g., S1G signal, is more suitable. The same signal can be used for both energy harvesting and phase-based positioning.

To facilitate understanding of the technical solutions of the embodiments of the present disclosure, the technical solutions of the present disclosure are described in detail below through specific embodiments. The following related technologies may be optionally combined in any manner with the technical solutions of the embodiments of the present disclosure, all of which fall within the protection scope of the embodiments of the present disclosure. The embodiments of the present disclosure include at least part of the following content.

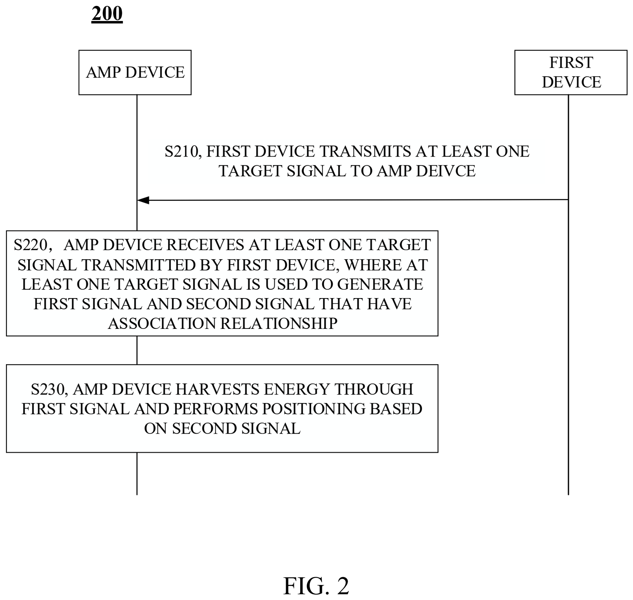

FIG. 2 is a schematic flow chart illustrating a method 200 for wireless communication method 200 according to embodiments of the present disclosure. As illustrated in FIG. 2, the method 200 for wireless communication method may include at least part of the following.

S210, a first device transmits at least one target signal to an AMP device.

S220, the AMP device receives the at least one target signal transmitted by the first device, where the at least one target signal is used to generate a first signal and a second signal that have an association relationship.

S230, the AMP device harvests energy through the first signal and performs positioning based on the second signal.

In the embodiments of the present disclosure, the AMP device may generate the first signal and the second signal that have an association relationship based on the at least one target signal received, and may obtain energy through the first signal and perform positioning based on the second signal, thereby reducing signaling overhead required for positioning by the AMP device and improving system efficiency.

In some embodiments, the at least one target signal is a narrowband S1G signal. Of course, the at least one target signal may also be other signals or other narrowband signals, and the embodiments of the present disclosure are not limited in this regard. Specifically, the narrowband S1G signal is more suitable for the AMP device to perform both energy harvesting and phase-based positioning due to its good propagation property.

It may be noted that, the communication signal reception sensitivity and RF radio energy harvesting sensitivity are significantly different. For example, on a WLAN, the received signal strength indication (RSSI) will range from -20 dBm (very close to an AP) to -95 dBm (away from the AP). Assuming a 10 dBm margin to account for the inevitable RSSI fluctuations in the link budget, a WLAN device (such as an 802.11b/g WLAN device) can maintain a wireless connection for a signal stronger than -84 dBm. However, energy harvesting sensitivity is only up to -35 dBm. The 49 dBm difference means that the wireless charging distance is much shorter than the communication distance.

The AMP device is a huge market in many scenarios, such as smart home, smart manufacturing, logistics/warehousing, etc. The APM device opens a whole new market due to its ultra-low cost and maintenance-free features. When cost efficient, maintenance-free, and high-accuracy positioning AMP device is required, the technical solutions of the present disclosure can be used. The embodiments of the present disclosure provide a technique/process that can be applied to AMP device-based positioning systems with RF radio energy harvesting.

In the embodiments of the present disclosure, a new type of nodes mainly for sending wireless charging signals, i.e., wireless charging nodes (WCNs), is designed and deployed. The WCN can charge AMP devices that cannot be wirelessly charged within the communication coverage. Specifically, the WCN can mainly transmit wireless charging signal with significantly reduced complexity and cost of charging the AMP devices.

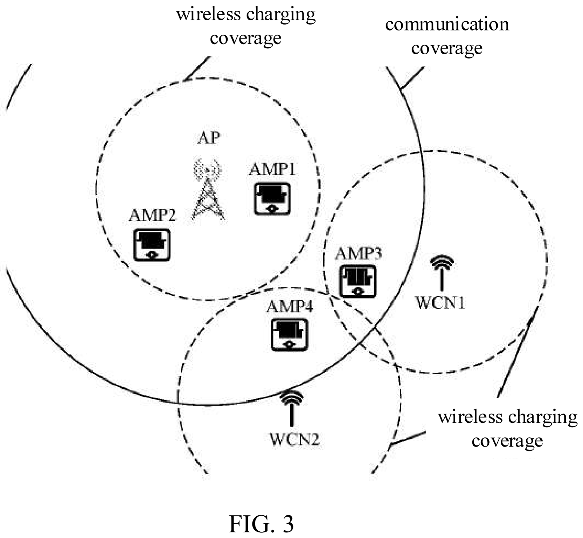

In some embodiments, the deployment density of WCNs shall be higher than that of normal communication nodes (such as APs). As illustrated in FIG. 3, all AMP devices are within the communication coverage, but only AMP 1 and AMP 2 are in wireless charging coverage of an AP. For AMP 3 and AMP 4, WCN 1 and WCN 2 are respectively deployed mainly for wireless charging. Specifically, the narrowband S1G signal may be suitable for wireless charging. The narrowband S1G signal may also be used for phase-based positioning to improve efficiency and reduce signaling overhead. For example, AMP 3 can receive both communication signals from the AP and wireless charging signals from WCN 1, and AMP 4 can receive both communication signals from the AP and wireless charging signals from WCN 2. Optionally, the at least one target signal may be transmitted by the AP or the WCN. If the wireless charging signal can also be used for positioning, the AMP device can receive more positioning signals and the positioning accuracy can be improved. Due to the minimized complexity and cost requirement for WCNs, there is no data processing modules such as modulation/demodulation, coding/decoding, etc.

In some embodiments, the first device is one of the following: a WCN, an AP, an STA, a transmission reception point (TRP), a base station, and a terminal device. Optionally, in a case where the first device is a device other than a WCN, the position of the first device is known, and the transmission power and energy storage of the first device meet a preset condition. Specifically, for example, the preset condition is determined via negotiation between the first device and the AMP device, or determined by the first device.

In some embodiments, the first device is a WCN. Specifically, before the WCN transmits the at least one target signal, a network device associated with the AMP device has obtained the location information of the WCN; and/or, the relevant configuration for transmission of the at least one target signal by the WCN is configured by the network device associated with the AMP device (specifically, configured to the WCN and the AMP device); and/or, the WCN can transmit the target signal periodically, or transmit the target signal after being requested or triggered by the AMP device or by the network device associated with the AMP device.

In some embodiments, the WCN is one of the following, having a known location and a transmission power and energy storage satisfying a preset condition: an AP, an STA, a TRP, a base station, and a terminal device. That is, specifically, an AP, an STA, a TRP, a base station, or a terminal device, which has a known location and sufficient transmission power and energy storage, may also serve as the WCN.

In some embodiments, the first signal and the second signal satisfy at least one of the following association relationships: power-division multiplexing (PDM), time-division multiplexing (TDM), or frequency-division multiplexing (FDM). Of course, the first signal and the second signal may also satisfy other association relationships, and the embodiments of the present disclosure are not limited in this regard.

In some embodiments, the first signal and the second signal satisfy the PDM relationship, and the at least one target signal includes a first target signal. A power of the first signal is *µ₁P₁,* and a power of the second signal is *(1-µ₁)P₁,* where *P₁* denotes a power of the first target signal, *µ₁* denotes a power splitting factor, *P₁* is a positive value, and *µ₁* is a non-negative value.

For example, in a slot, *µ₁* is equal to 0.5 and the power is evenly distributed between an energy harvester and a positioning module.

In another example, in a slot, *µ₁* can be adjusted to 0.75 and more power is allocated to the energy harvester since the energy storage level is low.

In another example, in a slot, *µ₁* can be adjusted to 0.25, and since the positioning accuracy is lower than the required target so more power should be allocated to the positioning signal.

In another example, in extreme cases, in a slot, *µ* can be 1 or 0, where all power is allocated to the energy harvester and the positioning module, respectively.

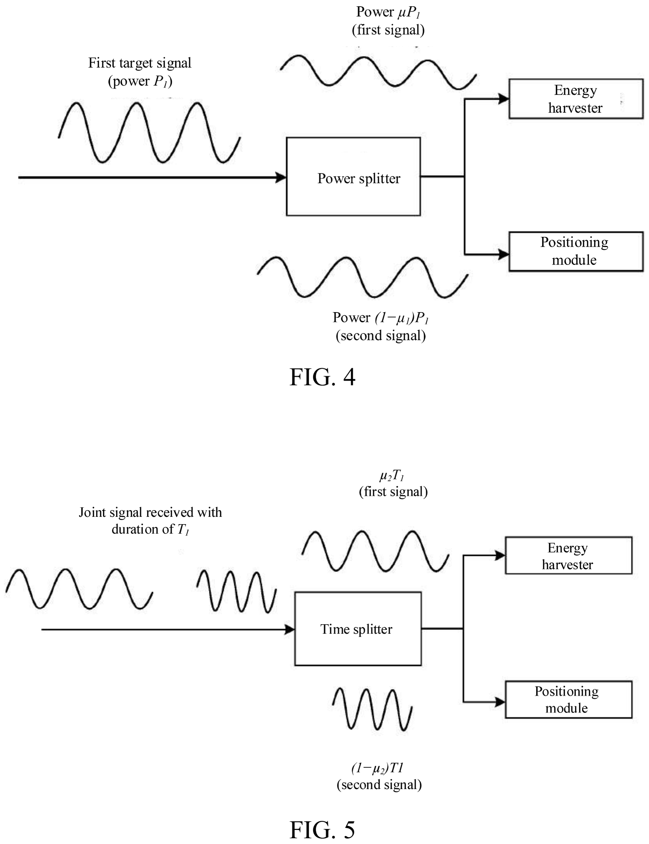

Specifically, as illustrated in FIG. 4, the power of the first target signal is *P₁*, and a power splitter splits the power of the first target signal into the first signal (*µ₁P₁*) and the second signal (*(1-µ₁)P₁*)*.* The AMP device harvests energy through the first signal and performs positioning based on the second signal.

In some embodiments, *µ₁* is determined based on at least one of: status of energy storage of the AMP device, positioning accuracy of the AMP device, throughput (also referred to as instantaneous traffic) of the AMP device, or a distance between the AMP device and the first device.

For example, for an AMP device closer to the first device (such as a WCN), *µ₁* can be small, in this case, the AMP device can still harvest enough energy. On the contrary, for an AMP device far away from the first device (such as a WCN), *µ₁* can be large to harvest more energy.

In some embodiments, *µ₁* is agreed upon by a protocol, or *µ₁* is configured by a network, or *µ₁* is determined via negotiation between the AMP device and the first device, or *µ₁* is determined by the first device based on one or more power splitting factors recommended by the AMP device.

In some embodiments, the first signal and the second signal satisfy the TDM relationship, where the first signal is a target signal received by the AMP device within *µ₂T₁,* and the second signal is a target signal received by the AMP device within *(1-µ₂)T₁,* where *T₁* denotes a duration during which the AMP device receives the target signal, *µ₂* denotes a time splitting factor, and both *T₁* and *µ₂* are positive values.

Specifically, as illustrated in FIG. 5, the AMP device receives a joint signal (i.e., multiple target signals) with a duration of *T₁,* and a time splitter assigns the target signal received within *µ₂T₁* as the first signal and assigns the target signal received within *(1-µ₂)T₁* as the second signal. The AMP device can harvest energy through the first signal and perform positioning based on the second signal.

In some embodiments, the target signal received by the AMP device within *µ₂T₁* and the target signal received by the AMP device within *(1-µ₂)T₁* are continuous. That is, the same signal is used for both energy harvesting and phase measurement for positioning, and the target signals between *µ₂T₁* and *(1-µ₂)T₁* are continuous.

In some embodiments, the target signal received by the AMP device within *µ₂T₁* and the target signal received by the AMP device within *(1-µ₂)T₁* are discontinuous. That is, different signals are used for energy harvesting and phase measurement for positioning, and the target signals between *µ₂T₁* and *(1-µ₂)T₁* are discontinuous.

In some embodiments, different AMP devices correspond to different *µ₂.* For example, in the case where the target signal received by the AMP device within *µ₂T₁* and the target signal received by the AMP device within *(1-µ₂)T₁* are continuous, different AMP devices correspond to different *µ₂*.

In some embodiments, different AMP devices correspond to the same *µ₂.* For example, in the case where the target signal received by the AMP device within *µ₂T₁* and the target signal received by the AMP device within *(1-µ₂)T₁* are discontinuous, different AMP devices correspond to the same *µ₂.*

In some embodiments, *µ₂* is determined based on at least one of: status of energy storage of the AMP device, positioning accuracy of the AMP device, throughput of the AMP device, or a distance between the AMP device and the first device.

For example, for an AMP device closer to the first device (such as a WCN), *µ₂* can be small, in this case, the AMP device can still harvest enough energy. On the contrary, for an AMP device far away from the first device (such as a WCN), *µ₂* can be large to harvest more energy.

In some embodiments, *µ₂* is agreed upon by protocol, or *µ₂* is configured by a network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

Specifically, for example, in the case where different AMP devices correspond to the same *µ₂, µ₂* is determined by the first device based on the power splitting factors recommended by part or all of the AMP devices associated with the first device. For example, *µ₂* may be the average value of the power splitting factors recommended by part or all of the AMP devices associated with the first device.

In some embodiments, the first signal and the second signal satisfy both the PDM relationship and the TDM relationship. The first signal is a signal with a power of *µ₁P₂* obtained by applying power splitting to the target signal received by the AMP device within *µ₂T₂.* The second signal includes: (i) a signal with a power of *(1-µ₁)P₂* obtained by applying power splitting to the target signal received by the AMP device within *µ₂T₂,* and (ii) the target signal received by the AMP device within *(1-µ₂)T₂. T₂* denotes a duration during which the AMP device receives the target signal, *P₂* denotes a power of the target signal received by the AMP device, *µ₁* denotes a power splitting factor, and *µ₂* denotes a time splitting factor, where *µ₁* is a non-negative value, and *T₁, P₂,* and *µ₂* are all positive values.

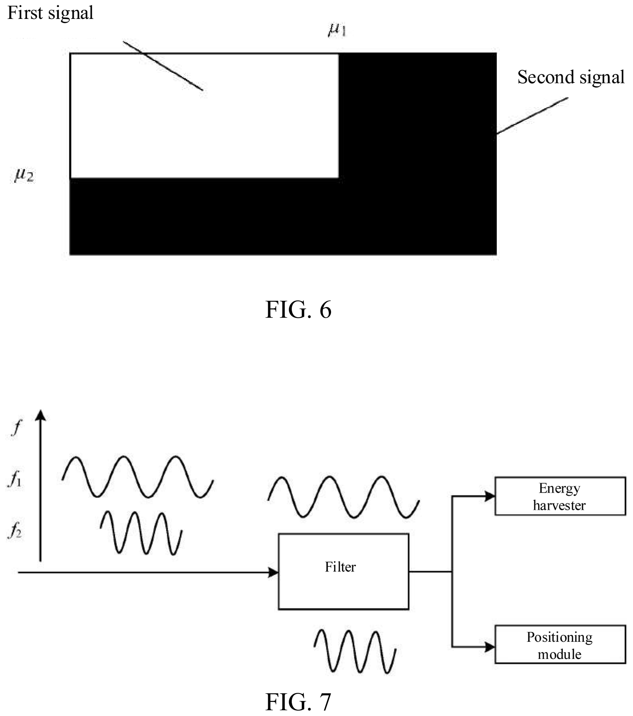

Specifically, for example, the first signal and the second signal satisfy both the PDM relationship and the TDM relationship. As illustrated in FIG. 6, a time splitter and a power splitter may both be introduced to generate both the first signal and the second signal.

In some embodiments, the target signal received by the AMP device within *µ₂T₂* and the target signal received by the AMP device within *(1-µ₂)T₂* are continuous. That is, the same signal is used for both energy harvesting and phase measurement for positioning, and the target signals between *µ₂T₂* and *(1-µ₂)T₂* are continuous.

In some embodiments, the target signal received by the AMP device within *µ₂T₂* and the target signal received by the AMP device within *(1-µ₂)T₂* are discontinuous. That is, different signals are used for energy harvesting and phase measurement for positioning, and the target signals between *µ₂T₂* and *(1-µ₂)T₂* are discontinuous.

In some embodiments, different AMP devices correspond to different *µ₂*. For example, in the case where the target signal received by the AMP device within *µ₂T₂* and the target signal received by the AMP device within *(1-µ₂)T₂* are continuous, different AMP devices correspond to different *µ₂*.

In some embodiments, different AMP devices correspond to the same *µ₂*. For example, in the case where the target signal received by the AMP device within *µ₂T₂* and the target signal received by the AMP device within *(1-µ₂)T₂* are discontinuous, different AMP devices correspond to the same *µ₂*.

In some embodiments, *µ₁* is determined based on at least one of: status of energy storage of the AMP device, positioning accuracy of the AMP device, throughput of the AMP device, or a distance between the AMP device and the first device.

For example, for an AMP device closer to the first device (such as a WCN), *µ₁* can be small, and the AMP device can still harvest enough energy. On the contrary, for an AMP device far away from the first device (such as a WCN), *µ₁* can be large to harvest more energy.

In some embodiments, *µ₁* is defined by a protocol, or *µ₁* is configured by a network, or *µ₁* is determined via negotiation between the AMP device and the first device, or *µ₁* is determined by the first device based on one or more power splitting factors recommended by the AMP device.

In some embodiments, *µ₂* is determined based on at least one of: status of energy storage of the AMP device, positioning accuracy of the AMP device, throughput of the AMP device, or a distance between the AMP device and the first device.

For example, for an AMP device closer to the first device (such as a WCN), *µ₂* can be small, and the AMP device can still harvest enough energy. On the contrary, for an AMP device far away from the first device (such as a WCN), *µ₂* can be large to harvest more energy.

In some embodiments, *µ₂* is defined by a protocol, or *µ₂* is configured by the network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

Specifically, for example, in the case where different AMP devices correspond to the same *µ₂, µ₂* is determined by the first device based on power splitting factors recommended by part or all of the AMP devices associated with the first device. For example, *µ₂* is the average value of power splitting factors recommended by part or all of the AMP devices associated with the first device.

In some embodiments, the first signal and the second signal satisfy the FDM relationship, where the first signal and the second signal are respectively target signals with a frequency of *f₁* and a frequency of *f₂* received by the AMP device. Specifically, for example, as illustrated in FIG. 7, the first signal is a target signal with a frequency of *f₁* received by the AMP device (signals with other frequencies are filtered by a filter), and the second signal is a target signal with a frequency of *f₂* received by the AMP device (signals with other frequencies are filtered by a filter). The AMP device can harvest energy through the first signal and perform positioning based on the second signal.

Optionally, the first signal and the second signal respectively correspond to different transmission configurations. That is, different transmission configurations can be applied to two target signals (i.e., the first signal and the second signal). For example, for periodic transmission, a wireless charging signal (i.e., the first signal) and a positioning signal (i.e., the second signal) may respectively correspond to different periodic configurations.

In some embodiments, *f₁* is defined by a protocol, or *f₁* is configured by a network, or *f₁* is determined via negotiation between the AMP device and the first device, or *f₁* is determined by the first device based on one or more frequencies recommended by the AMP device.

In some embodiments, *f₂* is defined by a protocol, or *f₂* is configured by the network, or *f₂* is determined via negotiation between the AMP device and the first device, or *f₂* is determined by the first device based on one or more frequencies recommended by the AMP device.

In some embodiments, the first signal and the second signal may also satisfy both the PDM relationship and the FDM relationship. For example, for a target signal with a frequency of *f₁* (power being *P₃*)*,* power splitting factor *µ₁* is introduced. Specifically, a power splitter can split the target signal with a frequency of *f₁* into a part for wireless charging (*µ₁P₃*) and another part for positioning (*(1-µ₁)P₃*)*.* That is, the first signal is a signal with a power of *µ₁P₃* obtained by applying power splitting to the target signal with a frequency of *f₁,* and the second signal includes: (i) a signal with a power of *(1-µ₁)P₃* obtained by applying power splitting to the target signal with a frequency of *f₁,* and (ii) a target signal with a frequency of *f₂.* In another example, for a target signal with a frequency of *f₂* (power being *P₄*)*,* power splitting factor *µ₁* is introduced. Specifically, a power splitter can split the target signal with a frequency of *f₂* into a part for wireless charging (*µ₁P₄*) and another part for positioning (*(1-µ₁)P₄*)*.* That is, the first signal includes: (i) the target signal with a frequency of *f₁,* and (ii) a signal with a power of *µ₁P₄* obtained by applying power splitting to the target signal with a frequency of *f₂*, and the second signal is a signal with a power of *(1-µ₁)P₄* obtained by applying power splitting to the target signal with a frequency of*f₂*.

Therefore, in the embodiments of the present disclosure, the AMP device can generate the first signal and the second signal that have an association relationship based on at least one target signal received, harvest energy through the first signal, and perform positioning based on the second signal, thereby reducing signaling overhead required for positioning by the AMP device and improving system efficiency.

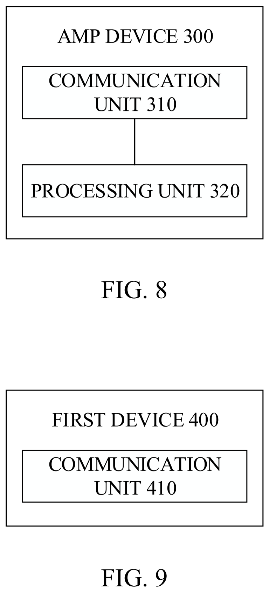

The foregoing has described the method embodiments of the present disclosure in detail in conjunction with FIGS. 2 to 7. The following describes device embodiments of the present disclosure in conjunction with FIGS. 8 to 12. It may be understood that, the device embodiments correspond to the method embodiments, and for similar illustrations, reference can be made to the method embodiments.

FIG. 8 is a schematic block diagram of an AMP device 300 according to embodiments of the present disclosure. As illustrated in FIG. 8, the AMP device 300 includes a communication unit 310 configured to receive at least one target signal transmitted by a first device, where the at least one target signal is used to generate a first signal and a second signal that have an association relationship; and a processing unit 320 configured to harvest energy through the first signal, and to perform positioning based on the second signal.

In some embodiments, the first signal and the second signal satisfy at least one of the following association relationships: PDM, TDM, or FDM.

In some embodiments, the first signal and the second signal satisfy a PDM relationship, and the at least one target signal includes a first target signal, where a power of the first signal is *µ₁P₁,* a power of the second signal is *(1-µ₁)P₁, P₁* denotes a power of the first target signal, *µ₁* denotes a power splitting factor, *P₁* is a positive value, and *µ₁* is a non-negative value.

In some embodiments, the first signal and the second signal satisfy a TDM relationship, where the first signal is a target signal received by the AMP device within *µ₂T₁,* the second signal is a target signal received by the AMP device within *(1-µ₂)T1, T₁* denotes a duration during which the AMP device receives the target signal, *µ₂* denotes a time splitting factor, and *T₁* and *µ₂* both are positive values.

In some embodiments, the target signal received by the AMP device within *µ₂T₁* and the target signal received by the AMP device within *(1-µ₂)T1* are continuous; or the target signal received by the AMP device within *µ₂T₁* and the target signal received by the AMP device within *(1-µ₂)T1* are discontinuous.

In some embodiments, the first signal and the second signal satisfy both a PDM relationship and a TDM relationship, where the first signal is a signal with a power of *µ₁P₂* obtained by applying power splitting to the target signal received by the AMP device within *µ₂T₂,* the second signal includes: (i) a signal with a power of *(1-µ₁)P₂* obtained by applying power splitting to the target signal received by the AMP device within *µ₂T₂,* and (ii) the target signal received by the AMP device within *(1-µ₂)T₂, T₂* denotes a duration during which the AMP device receives the target signal, *P₂* denotes a power of the target signal received by the AMP device, *µ₁* denotes a power splitting factor, *µ₂* denotes a time splitting factor, *µ₁* is a non-negative value, and *T₁, P₂,* and *µ₂* are all positive values.

In some embodiments, the target signal received by the AMP device within *µ₂T₂* and the target signal received by the AMP device within *(1-µ₂)T₂* are continuous or discontinuous.

In some embodiments, different AMP devices correspond to different *µ₂,* or different AMP devices correspond to same *µ₂*.

In some embodiments, *µ₁* is determined based on at least one of: status of energy storage of the AMP device, positioning accuracy of the AMP device, throughput of the AMP device, or a distance between the AMP device and the first device.

In some embodiments, *µ₁* is defined by a protocol, or *µ₁* is configured by a network, or *µ₁* is determined via negotiation between the AMP device and the first device, *or µ₁* is determined by the first device based on one or more power splitting factors recommended by the AMP device.

In some embodiments, *µ₂* is determined based on at least one of: status of energy storage of the AMP device, positioning accuracy of the AMP device, throughput of the AMP device, or a distance between the AMP device and the first device.

In some embodiments, *µ₂* is defined by a protocol, or *µ₂* is configured by a network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

In some embodiments, the first signal and the second signal satisfy an FDM relationship, where the first signal and the second signal are respectively target signals with a frequency of *f₁* and a frequency of *f₂* received by the AMP device.

In some embodiments, the first signal and the second signal respectively correspond to different transmission configurations.

In some embodiments, *f₁* is defined by a protocol, or *f₁* is configured by a network, or *f₁* is determined via negotiation between the AMP device and the first device, or *f₁* is determined by the first device based on one or more frequencies recommended by the AMP device; and/or, *f₂* is defined by a protocol, or *f₂* is configured by the network, or *f₂* is determined via negotiation between the AMP device and the first device, or *f₂* is determined by the first device based on one or more frequencies recommended by the AMP device.

In some embodiments, the at least one target signal is a narrowband sub-1 GHz (S1G) signal.

In some embodiments, the first device is one of: a WCN, an AP, an STA, a TRP, a base station, and a terminal device.

In some embodiments, in a case where the first device is a device other than the WCN, a location of the first device is known, and a transmission power and energy storage of the first device satisfy a preset condition.

In some embodiments, the first device is a WCN, where a network device associated with the AMP device has obtained location information of the WCN before the WCN transmits the at least one target signal; and/or, a related configuration for transmission of the at least one target signal by the WCN is configured by the network device associated with the AMP device; and/or, the WCN periodically transmits the target signal, or the WCN transmits the target signal after being requested or triggered by the AMP device or the network device associated with the AMP device.

In some embodiments, the WCN is one of the following, having a known location and a transmission power and energy storage satisfying a preset condition: an AP, a STA, a TRP, a base station, and a terminal device.

In some embodiments, the communication unit described above may be a communication interface or a transceiver, or an input/output interface of a communication chip or a system on chip (SoC). The processing unit may be one or more processors.

It may be understood that, the AMP device 300 according to the embodiments of the present disclosure may correspond to the AMP device in the method embodiments of the present disclosure, and the foregoing and other operations and/or functions of each unit in the AMP device 300 are respectively configured to implement the corresponding processes of the AMP device in the method 200 as illustrated in FIG. 2. For the sake of brevity, such illustrations will not be repeated here.

FIG. 9 is a schematic block diagram of a first device 400 according to embodiments of the present disclosure. As illustrated in FIG. 9, the first device 400 includes a communication unit 410 configured to transmit at least one target signal to an AMP device, where the at least one target signal is used to generate a first signal and a second signal that have an association relationship, the first signal is used by the AMP device to harvest energy, and the second signal is used by the AMP device to perform positioning.

In some embodiments, the first signal and the second signal satisfy at least one of the following association relationships: PDM, TDM, or FDM.

In some embodiments, the first signal and the second signal satisfy a PDM relationship, and the at least one target signal includes a first target signal, where a power of the first signal is *µ₁P₁,* a power of the second signal is *(1-µ₁)P₁, P₁* denotes a power of the first target signal, *µ₁* denotes a power splitting factor, *P₁* is a positive value, and *µ₁* is a non-negative value.

In some embodiments, the first signal and the second signal satisfy a TDM relationship, where the first signal is a target signal received by the AMP device within *µ₂T₁,* the second signal is a target signal received by the AMP device within *(1-µ₂)T1, T₁* denotes a duration during which the AMP device receives the target signal, *µ₂* denotes a time splitting factor, and *T₁* and *µ₂* both are positive values.

In some embodiments, the target signal received by the AMP device within *µ₂T₁* and the target signal received by the AMP device within *(1-µ₂)T1* are continuous; or the target signal received by the AMP device within *µ₂T₁* and the target signal received by the AMP device within *(1-µ₂)T1* are discontinuous.

In some embodiments, the first signal and the second signal satisfy both a PDM relationship and a TDM relationship, where the first signal is a signal with a power of *µ₁P₂* obtained by applying power splitting to the target signal received by the AMP device within *µ₂T₂,* the second signal includes: (i) a signal with a power of *(1-µ₁)P₂* obtained by applying power splitting to the target signal received by the AMP device within *µ₂T₂,* and (ii) the target signal received by the AMP device within *(1-µ₂)T₂, T₂* denotes a duration during which the AMP device receives the target signal, *P₂* denotes a power of the target signal received by the AMP device, *µ₁* denotes a power splitting factor, *µ₂* denotes a time splitting factor, *µ₁* is a non-negative number, and *T₁, P₂,* and *µ₂* are all positive values.

In some embodiments, the target signal received by the AMP device within *µ₂T₂* and the target signal received by the AMP device within *(1-µ₂)T₂* are continuous or discontinuous.

In some embodiments, different AMP devices correspond to different *µ₂,* or different AMP devices correspond to same *µ₂*.

In some embodiments, *µ₁* is determined based on at least one of: status of energy storage of the AMP device, positioning accuracy of the AMP device, throughput of the AMP device, or a distance between the AMP device and the first device.

In some embodiments, *µ₁* is defined by a protocol, or *µ₁* is configured by a network, or *µ₁* is determined via negotiation between the AMP device and the first device, *or µ₁* is determined by the first device based on one or more power splitting factors recommended by the AMP device.

In some embodiments, *µ₂* is determined based on at least one of: status of energy storage of the AMP device, positioning accuracy of the AMP device, throughput of the AMP device, or a distance between the AMP device and the first device.

In some embodiments, *µ₂* is defined by a protocol, or *µ₂* is configured by a network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

In some embodiments, the first signal and the second signal satisfy an FDM relationship, where the first signal and the second signal are respectively target signals with a frequency of *f₁* and a frequency of *f₂* received by the AMP device.

In some embodiments, the first signal and the second signal respectively correspond to different transmission configurations.

In some embodiments, *f₁* is defined by a protocol, or *f₁* is configured by a network, or *f₁* is determined via negotiation between the AMP device and the first device, or *f₁* is determined by the first device based on one or more frequencies recommended by the AMP device; and/or*f₂* is defined by a protocol, or *f₂* is configured by the network, or *f₂* is determined via negotiation between the AMP device and the first device, or *f₂* is determined by the first device based on one or more frequencies recommended by the AMP device.

In some embodiments, the at least one target signal is a narrowband sub-1 GHz (S1G) signal.

In some embodiments, the first device is one of: a WCN, an AP, an STA, a TRP, a base station, and a terminal device.

In some embodiments, in a case where the first device is a device other than the WCN, a location of the first device is known, and a transmission power and energy storage of the first device satisfy a preset condition.

In some embodiments, the first device is a WCN, where a network device associated with the AMP device has obtained location information of the WCN before the WCN transmits the at least one target signal; and/or, a related configuration for transmission of the at least one target signal by the WCN is configured by the network device associated with the AMP device; and/or, the WCN periodically transmits the target signal, or the WCN transmits the target signal after being requested or triggered by the AMP device or by the network device associated with the AMP device.

In some embodiments, the WCN is one of the following, having a known location and a transmission power and energy storage satisfying a preset condition: an AP, a STA, a TRP, a base station, and a terminal device.

In some embodiments, the communication unit described above may be a communication interface or a transceiver, or an input/output interface of a communication chip or an SoC. The processing unit may be one or more processors.

It may be understood that, the first device 400 according to the embodiments of the present disclosure may correspond to the first device in the method embodiments of the present disclosure, and the foregoing and other operations and/or functions of each unit in the first device 400 are respectively configured to implement the corresponding processes of the first device in the method 200 as illustrated in FIG. 2. For the sake of brevity, such illustrations will not be repeated here.

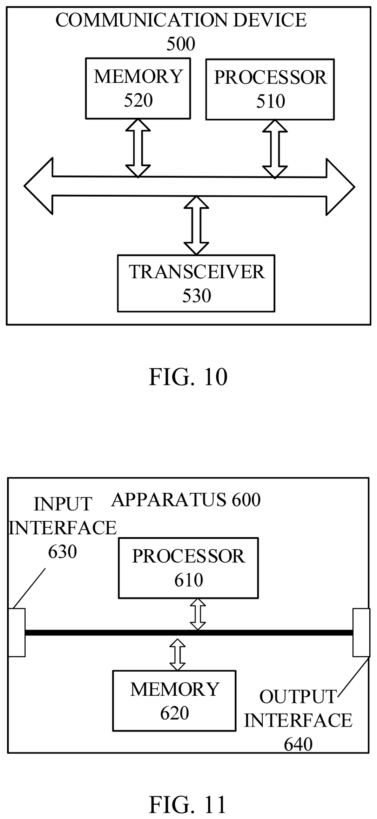

FIG. 10 is a schematic structural diagram of a communication device 500 provided in the embodiments of the present disclosure. As illustrated in FIG. 10, the communication device 500 includes a processor 510, which may invoke and execute a computer program from a memory to implement the methods in the embodiments of the present disclosure.

In some embodiments, as illustrated in FIG. 10, the communication device 500 may further include a memory 520. The processor 510 may invoke and execute a computer program from the memory 520 to implement the methods in the embodiments of the present disclosure. The memory 520 may be a separate device independent of the processor 510, or may be integrated within the processor 510.

In some embodiments, as illustrated in FIG. 10, the communication device 500 may further include a transceiver 530. The processor 510 may control the transceiver 530 to communicate with other devices. Specifically, the transceiver may be configured to transmit information or data to, or receive information or data from, other devices. The transceiver 530 may include a transmitter and a receiver. The transceiver 530 may further include one or more antennas.

In some embodiments, the processor 510 may implement the functions of the processing unit in the AMP device, or the processor 510 may implement the functions of the processing unit in the first device. For the sake of brevity, details are not repeated herein.

In some embodiments, the transceiver 530 may implement the functions of the communication unit in the AMP device. For the sake of brevity, details are not repeated herein.

In some embodiments, the transceiver 530 may implement the functions of the communication unit in the first device. For the sake of brevity, details are not repeated herein.

In some embodiments, the communication device 500 may specifically be the first device in the embodiments of the present disclosure, and the communication device 500 may implement the corresponding processes of the first device in the various methods of the embodiments of the present disclosure. For the sake of brevity, details are not repeated herein.

In some embodiments, the communication device 500 may specifically be the AMP device in the embodiments of the present disclosure, and the communication device 500 may implement the corresponding processes of the AMP device in the various methods of the embodiments of the present disclosure. For the sake of brevity, details are not repeated herein.

FIG. 11 is a schematic structural diagram of a device according to embodiments of the present disclosure. As illustrated in FIG. 11, an apparatus 600 includes a processor 610, which may invoke and execute a computer program from a memory to implement the methods in the embodiments of the present disclosure.

In some embodiments, as illustrated in FIG. 11, the apparatus 600 may further include a memory 620. The processor 610 may invoke and execute a computer program from the memory 620 to implement the methods in the embodiments of the present disclosure. The memory 620 may be a separate device independent of the processor 610, or may be integrated within the processor 610.

In some embodiments, the processor 610 may implement the functions of the processing unit in the AMP device, or the processor 610 may implement the functions of the processing unit in the first device. For the sake of brevity, details are not repeated herein.

In some embodiments, the apparatus 600 may further include an input interface 630. The processor 610 may control the input interface 630 to communicate with other devices or chips, specifically, to acquire information or data sent by other devices or chips. Optionally, the processor 610 may be located inside or outside a chip.

In some embodiments, the input interface 630 may implement the functions of the communication unit in the AMP device, or the input interface 630 may implement the functions of the communication unit in the first device.

In some embodiments, the apparatus 600 may further include an output interface 640. The processor 610 may control the output interface 640 to communicate with other devices or chips. Specifically, the processor 610 may output information or data to other devices or chips. Optionally, the processor 610 may be located inside or outside a chip.

In some embodiments, the output interface 640 may implement the functions of the communication unit in the AMP device, or the output interface 640 may implement the functions of the communication unit in the first device.

In some embodiments, the device may be applied to the first device in the embodiments of the present disclosure, and the device may implement the corresponding processes of the first device in the various methods of the embodiments of the present disclosure. For the sake of brevity, details are not repeated herein.

In some embodiments, the device may be applied to the AMP device in the embodiments of the present disclosure, and the device may implement the corresponding processes of the AMP device in the various methods of the embodiments of the present disclosure. For the sake of brevity, details are not repeated herein.

In some embodiments, the device referred to in the embodiments of the present disclosure may also be a chip, for example, may be a system-level chip, a system chip, a chip system, or an SoC.

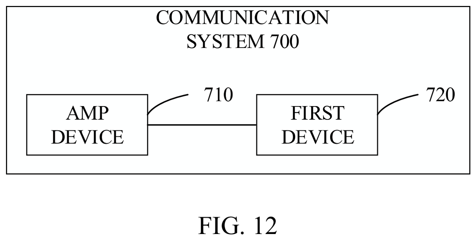

FIG. 12 is a schematic block diagram of a communication system 700 provided in embodiments of the present disclosure. As illustrated in FIG. 12, the communication system 700 includes an AMP device 710 and a first device 720. The AMP device 710 may be configured to implement the corresponding functions of the AMP device in the above-described methods, and the first device 720 may be configured to implement the corresponding functions of the first device in the above-described methods. For the sake of brevity, details are not repeated herein.

It may be understood that, the processor in embodiments of the present disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the present disclosure can be implemented or executed. The general-purpose processor may be a microprocessor, or the processor may be any conventional processor or the like. The steps of the method disclosed in embodiments of the present disclosure may be directly implemented by a hardware decoding processor, or may be performed by hardware and software modules in the decoding processor. The software module can be located in a storage medium well known in the art such as a random access memory (RAM), a flash memory, a read only memory (ROM), a programmable ROM (PROM), or an electrically erasable programmable memory, registers, and the like. The storage medium is located in the memory. The processor can read the information in the memory, and completes the steps of the method described above with the hardware thereof.

It can be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It may be noted that, the memory of the systems and methods described in the present disclosure is intended to include, but is not limited to, these and any other suitable types of memory.

It may be understood that, the memory above is intended for illustration rather than limitation. For example, the memory in embodiments of the present disclosure may also be an SRAM, a DRAM, an SDRAM, a DDR SDRAM, an ESDRAM, an SLDRAM, a DR RAM, etc. In other words, the memory in embodiments of the present disclosure is intended to include, but is not limited to, these and any other suitable types of memory.

The embodiments of the present disclosure further provide a computer-readable storage medium configured to store a computer program.

In some embodiments, the computer-readable storage medium may be applied to a first device in the embodiments of the present disclosure, and the computer program may cause a computer to execute the corresponding processes implemented by the first device in the various methods of the embodiments of the present disclosure. For the sake of brevity, details are not repeated herein.

In some embodiments, the computer-readable storage medium may be applied to an AMP device in the embodiments of the present disclosure, and the computer program may cause the computer to execute the corresponding processes implemented by the AMP device in the various methods of the embodiments of the present disclosure. For the sake of brevity, details are not repeated herein.

The embodiments of the present disclosure further provide a computer program product including computer program instructions.

In some embodiments, the computer program product may be applied to a first device in the embodiments of the present disclosure, and the computer program instructions may cause a computer to execute the corresponding processes implemented by the first device in the various methods of the embodiments of the present disclosure. For the sake of brevity, details are not repeated herein.

In some embodiments, the computer program product may be applied to an AMP device in the embodiments of the present disclosure, and the computer program instructions may cause the computer to execute the corresponding processes implemented by the AMP device in the various methods of the embodiments of the present disclosure. For the sake of brevity, details are not repeated herein.

The embodiments of the present disclosure further provide a computer program.

In some embodiments, the computer program may be applied to the first device in the embodiments of the present disclosure, and when the computer program is executed on a computer, the computer is caused to execute the corresponding processes implemented by the first device in the various methods of the embodiments of the present disclosure. For the sake of brevity, details are not repeated herein.

In some embodiments, the computer program may be applied to the AMP device in the embodiments of the present disclosure, and when the computer program is executed on a computer, the computer is caused to execute the corresponding processes implemented by the AMP device in the various methods of the embodiments of the present disclosure. For the sake of brevity, details are not repeated herein.

Those of ordinary skill in the art will appreciate that units and algorithmic operations of various examples described in connection with embodiments of the present disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the present disclosure.

It may be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It may be appreciated that, the systems, apparatuses, and methods disclosed in embodiments of the present disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the related art, or part of the technical solution of the present disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the present disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving, by an ambient power (AMP) device, at least one target signal transmitted by a first device, wherein the at least one target signal is used to generate a first signal and a second signal that have an association relationship;
harvesting, by the AMP device, energy through the first signal, and performing, by the AMP device, positioning based on the second signal.

2. The method according to claim 1, wherein
the first signal and the second signal satisfy at least one of the following association relationships:
power-division multiplexing (PDM), time-division multiplexing (TDM), or frequency-division multiplexing (FDM).

3. The method according to claim 1 or 2, wherein
the first signal and the second signal satisfy a PDM relationship, and the at least one target signal comprises a first target signal;
wherein a power of the first signal is *µ₁P₁,* and a power of the second signal is *(1-µ₁)P₁;*
wherein *P₁* denotes a power of the first target signal, *µ₁* denotes a power splitting factor, *P₁* is a positive value, and *µ₁* is a non-negative value.

4. The method according to claim 1 or 2, wherein
the first signal and the second signal satisfy a TDM relationship;
wherein the first signal is a target signal received by the AMP device within *µ₂T₁,* and the second signal is a target signal received by the AMP device within *(1-µ₂)T1;*
wherein *T₁* denotes a duration during which the AMP device receives the target signal, *µ₂* denotes a time splitting factor, and *T₁* and *µ₂* both are positive values.

5. The method according to claim 4, wherein the target signal received by the AMP device within *µ₂T₁* and the target signal received by the AMP device within *(1-µ₂)T1* are continuous; or the target signal received by the AMP device within *µ₂T₁* and the target signal received by the AMP device within *(1-µ₂)T1* are discontinuous.

6. The method according to claim 1 or 2, wherein
the first signal and the second signal satisfy both a PDM relationship and a TDM relationship;
wherein the first signal is a signal with a power of *µ₁P₂* obtained by applying power splitting to a target signal received by the AMP device within *µ₂T₂;* and the second signal comprises: (i) a signal with a power of *(1-µ₁)P₂* obtained by applying power splitting to the target signal received by the AMP device within *µ₂T₂,* and (ii) a target signal received by the AMP device within *(1-µ₂)T₂;*
wherein *T₂* denotes a duration during which the AMP device receives the target signal, *P₂* denotes a power of the target signal received by the AMP device, *µ₁* denotes a power splitting factor, and *µ₂* denotes a time splitting factor, wherein *µ₁* is a non-negative value, and *T₁, P₂,* and *µ₂* are all positive values.

7. The method according to claim 6, wherein the target signal received by the AMP device within *µ₂T₂* and the target signal received by the AMP device within *(1-µ₂)T₂* are continuous; or the target signal received by the AMP device within *µ₂T₂* and the target signal received by the AMP device within *(1-µ₂)T₂* are discontinuous.

8. The method according to claim 5 or 7, wherein
different AMP devices correspond to different *µ₂,* or different AMP devices correspond to same *µ₂*.

9. The method according to claim 3 or 6, wherein
*µ₁* is determined based on at least one of: status of energy storage of the AMP device, positioning accuracy of the AMP device, throughput of the AMP device, or a distance between the AMP device and the first device.

10. The method according to claim 3 or 6, wherein
*µ₁* is defined by a protocol, or *µ₁* is configured by a network, or *µ₁* is determined via negotiation between the AMP device and the first device, or *µ₁* is determined by the first device based on one or more power splitting factors recommended by the AMP device.

11. The method according to any one of claims 4 to 8, wherein
*µ₂* is determined based on at least one of: status of energy storage of the AMP device, positioning accuracy of the AMP device, throughput of the AMP device, or a distance between the AMP device and the first device.

12. The method according to any one of claims 4 to 8, wherein
*µ₂* is defined by a protocol, or *µ₂* is configured by a network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

13. The method according to claim 1 or 2, wherein
the first signal and the second signal satisfy an FDM relationship, wherein the first signal and the second signal are respectively target signals with a frequency of *f₁* and a frequency of *f₂* received by the AMP device.

14. The method according to claim 13, wherein
the first signal and the second signal respectively correspond to different transmission configurations.

15. The method according to claim 13 or 14, wherein:
*f₁* is defined by a protocol, or *f₁* is configured by a network, or *f₁* is determined via negotiation between the AMP device and the first device, or *f₁* is determined by the first device based on one or more frequencies recommended by the AMP device.; and/or
*f₂* is defined by a protocol, or *f₂* is configured by the network, or *f₂* is determined via negotiation between the AMP device and the first device, or *f₂* is determined by the first device based on one or more frequencies recommended by the AMP device.

16. The method according to any one of claims 1 to 15, wherein
the at least one target signal is a narrowband sub-1 GHz (S1G) signal.

17. The method according to any one of claims 1 to 16, wherein the first device is one of: a wireless charging node (WCN), an access point (AP), a station (STA), a transmission reception point (TRP), a base station, and a terminal device.

18. The method according to claim 17, wherein
in a case where the first device is a device other than the WCN, a location of the first device is known, and a transmission power and energy storage of the first device satisfy a preset condition.

19. The method according to any one of claims 1 to 16, wherein
the first device is a WCN;
wherein a network device associated with the AMP device has obtained location information of the WCN before the WCN transmits the at least one target signal; and/or, a related configuration for transmission of the at least one target signal by the WCN is configured by the network device associated with the AMP device; and/or, the WCN periodically transmits the target signal, or the WCN transmits the target signal after being requested or triggered by the AMP device or by the network device associated with the AMP device.

20. The method according to claim 19, wherein
the WCN is one of the following, having a known location and a transmission power and energy storage satisfying a preset condition: an AP, a STA, a TRP, a base station, and a terminal device.

21. A method for wireless communication, comprising:
transmitting, by a first device, at least one target signal to an ambient power (AMP) device;
wherein the at least one target signal is used to generate a first signal and a second signal that have an association relationship, the first signal is used by the AMP device to harvest energy, and the second signal is used by the AMP device to perform positioning.

22. The method according to claim 21, wherein
the first signal and the second signal satisfy at least one of the following association relationships:
power-division multiplexing (PDM), time-division multiplexing (TDM), or frequency-division multiplexing (FDM).

23. The method according to claim 21 or 22, wherein
the first signal and the second signal satisfy a PDM relationship, and the at least one target signal comprises a first target signal;
wherein a power of the first signal is *µ₁P₁,* and a power of the second signal is *(1-µ₁)P₁;*
wherein *P₁* denotes a power of the first target signal, *µ₁* denotes a power splitting factor, *P₁* is a positive value, and *µ₁* is a non-negative value.

24. The method according to claim 21 or 22, wherein
the first signal and the second signal satisfy a TDM relationship;
wherein the first signal is a target signal received by the AMP device within *µ₂T₁,* and the second signal is a target signal received by the AMP device within *(1-µ₂)T1;*
wherein *T₁* denotes a duration during which the AMP device receives the target signal, *µ₂* denotes a time splitting factor, and *T₁* and *µ₂* both are positive values.

25. The method according to claim 24, wherein the target signal received by the AMP device within *µ₂T₁* and the target signal received by the AMP device within *(1-µ₂)T1* are continuous; or the target signal received by the AMP device within *µ₂T₁* and the target signal received by the AMP device within *(1-µ₂)T1* are discontinuous.

26. The method according to claim 21 or 22, wherein
the first signal and the second signal satisfy both a PDM relationship and a TDM relationship;
wherein the first signal is a signal with a power of *µ₁P₂* obtained by applying power splitting to the target signal received by the AMP device within *µ₂T₂;* and the second signal comprises: (i) a signal with a power of *(1-µ₁)P₂* obtained by applying power splitting to the target signal received by the AMP device within *µ₂T₂,* and (ii) the target signal received by the AMP device within *(1-µ₂)T₂;*
wherein *T₂* denotes a duration during which the AMP device receives the target signal, *P₂* denotes a power of the target signal received by the AMP device, *µ₁* denotes a power splitting factor, and *µ₂* denotes a time splitting factor, wherein *µ₁* is a non-negative value, and *T₁, P₂,* and *µ₂* are all positive values.

27. The method according to claim 26, wherein the target signal received by the AMP device within *µ₂T₂* and the target signal received by the AMP device within *(1-µ₂)T₂* are continuous; or the target signal received by the AMP device within *µ₂T₂* and the target signal received by the AMP device within *(1-µ₂)T₂* are discontinuous.

28. The method according to claim 25 or 27, wherein
different AMP devices correspond to different *µ₂,* or different AMP devices correspond to same *µ₂*.

29. The method according to claim 23 or 26, wherein
*µ₁* is determined based on at least one of: status of energy storage of the AMP device, positioning accuracy of the AMP device, throughput of the AMP device, or a distance between the AMP device and the first device.

30. The method according to claim 23 or 26, wherein
*µ₁* is defined by a protocol, or *µ₁* is configured by a network, or *µ₁* is determined via negotiation between the AMP device and the first device, or *µ₁* is determined by the first device based on one or more power splitting factors recommended by the AMP device.

31. The method according to any one of claims 24 to 28, wherein
*µ₂* is determined based on at least one of: status of energy storage of the AMP device, positioning accuracy of the AMP device, throughput of the AMP device, or a distance between the AMP device and the first device.

32. The method according to any one of claims 24 to 28, wherein
*µ₂* is defined by a protocol, or *µ₂* is configured by a network, or *µ₂* is determined via negotiation between the AMP device and the first device, or *µ₂* is determined by the first device based on one or more power splitting factors recommended by the AMP device, or *µ₂* is determined by the first device based on power splitting factors recommended by part or all of AMP devices associated with the first device.

33. The method according to claim 21 or 22, wherein
the first signal and the second signal satisfy an FDM relationship, wherein the first signal and the second signal are respectively target signals with a frequency of *f₁* and a frequency of *f₂* received by the AMP device.

34. The method according to claim 33, wherein
the first signal and the second signal respectively correspond to different transmission configurations.

35. The method according to claim 33 or 34, wherein:
*f₁* is defined by a protocol, or *f₁* is configured by a network, or *f₁* is determined via negotiation between the AMP device and the first device, or *f₁* is determined by the first device based on one or more frequencies recommended by the AMP device; and/or
*f₂* is defined by a protocol, or *f₂* is configured by the network, or *f₂* is determined via negotiation between the AMP device and the first device, or *f₂* is determined by the first device based on one or more frequencies recommended by the AMP device.

36. The method according to any one of claims 21 to 35, wherein
the at least one target signal is a narrowband sub-1 GHz (S1G) signal.

37. The method according to any one of claims 21 to 36, wherein the first device is one of: a wireless charging node (WCN), an access point (AP), a station (STA), a transmission reception point (TRP), a base station, and a terminal device.

38. The method according to claim 37, wherein
in a case where the first device is a device other than the WCN, a location of the first device is known, and a transmission power and energy storage of the first device satisfy a preset condition.

39. The method according to any one of claims 21 to 36, wherein
the first device is a WCN;
wherein a network device associated with the AMP device has obtained location information of the WCN before the WCN transmits the at least one target signal; and/or, a related configuration for transmission of the at least one target signal by the WCN is configured by the network device associated with the AMP device; and/or, the WCN periodically transmits the target signal, or the WCN transmits the target signal after being requested or triggered by the AMP device or by the network device associated with the AMP device.

40. The method according to claim 39, wherein
the WCN is one of the following, having a known location and a transmission power and energy storage satisfying a preset condition: an AP, a STA, a TRP, a base station, and a terminal device.

41. An ambient power (AMP) device, comprising:
a communication unit configured to receive at least one target signal transmitted by a first device, wherein the at least one target signal is used to generate a first signal and a second signal that have an association relationship; and
a processing unit configured to harvest energy through the first signal, and to perform positioning based on the second signal.

42. A first device, comprising:
a communication unit configured to transmit at least one target signal to an ambient power (AMP) device;
wherein the at least one target signal is used to generate a first signal and a second signal that have an association relationship, the first signal is used by the AMP device to harvest energy, and the second signal is used by the AMP device to perform positioning.

43. An ambient power (AMP) device, comprising a processor and a memory, the memory being configured to store a computer program, and the processor being configured to invoke and execute the computer program stored in the memory such that the AMP device performs the method according to any one of claims 1 to 20.

44. A first device, comprising a processor and a memory, the memory being configured to store a computer program, and the processor being configured to invoke and execute the computer program stored in the memory such that the first device performs the method according to any one of claims 21 to 40.

45. A chip, comprising a processor configured to invoke and execute a computer program from a memory such that a device equipped with the chip performs the method according to any one of claims 1 to 20.

46. A chip, comprising a processor configured to invoke and execute a computer program from a memory such that a device equipped with the chip performs the method according to any one of claims 21 to 40.

47. A computer-readable storage medium configured to store a computer program,
wherein when the computer program is executed, the method according to any one of claims 1 to 20 is implemented.

48. A computer-readable storage medium configured to store a computer program,
wherein when the computer program is executed, the method according to any one of claims 21 to 40 is implemented.

49. A computer program product, comprising computer program instructions, wherein when the computer program instructions are executed, the method according to any one of claims 1 to 20 is implemented.

50. A computer program product, comprising computer program instructions, wherein when the computer program instructions are executed, the method according to any one of claims 21 to 40 is implemented.

51. A computer program, wherein when the computer program is executed, the method according to any one of claims 1 to 20 is implemented.

52. A computer program, wherein when the computer program is executed, the method according to any one of claims 21 to 40 is implemented.
